# EUROPÄISCHE PATENTSCHRIFT

(11) **EP 4 062 526 B1**
(45) Veröffentlichungstag und Bekanntmachung des Hinweises auf die Patenterteilung: **29.05.2024**
(21) Anmeldenummer: 20776174.3
(22) Anmeldetag: 24.09.2020
(51) Int. Cl.: H02M 7/5387, H02P 27/08

(54) **ANSTEUERN DREIPHASIGER INDUKTIVER LASTEN IM TEILLASTBETRIEB MIT VERMINDERTEN INVERTER-SCHALTVERLUSTEN**
CONTROL OF THREE PHASE INDUCTIVE LOAD IN PARTIAL LOAD OPERATION WITH REDUCED INVERTER SWITCHING LOSSES
CONTRÔLE DE LA CHARGE INDUCTIVE TRIPHASÉE EN FONCTIONNEMENT À CHARGE PARTIELLE AVEC RÉDUCTION DES PERTES DE COMMUTATION DE L'ONDULEUR

(30) Priorität: 18.11.2019 DE 102019217688
(43) Veröffentlichungstag der Anmeldung: 28.09.2022
(73) Patentinhaber: Robert Bosch GmbH, 70442 Stuttgart (DE)
(72) Erfinder: MANUSHYN, Illia, 71672 Marbach Am Neckar (DE); WESSNER, Jochen, 73728 Esslingen (DE)
(86) Internationale Anmeldenummer: PCT/EP2020/076682
(87) Internationale Veröffentlichungsnummer: WO 2021/099012

(56) Entgegenhaltungen:
- EP-A1- 2 536 019
- US-A1- 2009 200 971

## Beschreibung

Die vorliegende Erfindung betrifft ein Verfahren zum Betreiben dreiphasiger induktiver Lasten an Invertern, wobei der effektive Strom durch Pulsweitenmodulation vorgegeben wird.

### Stand der Technik

In einem elektrischen Antriebsystem, das elektrische Energie in mechanische Energie umwandelt, werden bevorzugt drei- oder mehrphasige Wechselstrommotoren verwendet, die einen guten Wirkungsgrad haben und im Gegensatz zu Gleichstrommotoren ohne verschleißanfällige Bürsten auskommen. Derartige Antriebssysteme werden beispielsweise in Aufzügen, in Pumpen sowie in Antriebssträngen für elektrisch angetriebene Fahrzeuge eingesetzt. Im Fahrzeug mitführbare elektrische Energiequellen, wie etwa Batterien oder Brennstoffzellen, liefern jedoch in der Regel eine Gleichspannung. Für Industrieanwendungen wird meistens dreiphasiger Wechselstrom benutzt, der mit einem Gleichrichter gleichgerichtet wird.

Zur Wandlung der Gleichspannung in eine drei- oder mehrphasige Wechselspannung kommen Inverter zum Einsatz.

Dabei ändern sich im Fahrbetrieb permanent die Anforderungen an das Drehmoment und an die Drehzahl. So wird zum Beschleunigen eine höhere Drehzahl und zum Halten der Geschwindigkeit an einer Steigung ein höheres Drehmoment angefordert. Der Inverter kann sowohl die Frequenz als auch die effektive Stromstärke des Wechselstroms in weiten Grenzen variieren. Die Wandlung in Wechselstrom durch schnelle zeitliche Taktung von

Leistungshalbleitern im Inverter kostet jedoch Energie. Die DE 10 2004 027 629 A1 offenbart ein Verfahren zur Pulsweitenmodulation, mit dem bei der Erzeugung einer sinusförmigen dreiphasigen Wechselspannung durch einen Inverter ein Teil der Schaltverluste eingespart werden kann.

Durch die US 2009/200971 A1 ist ein Verfahren zum Betreiben eines Inverters bekannt, der drei Wechselstromphasen einer induktiven Last durch das Ansteuern von in drei Halbbrücken angeordneten Schaltelementen jeweils wahlweise mit dem Pluspol oder Minuspol einer am Eingang des Inverters vorgelegten Gleichspannung verbindet. Die Schaltzustände der Schaltelemente werden durch umlaufende Raumzeigermodulation verändert. Zusätzlich bleibt bei einer Modulation zwischen Raumzeigern, die bezüglich mindestens einer Halbbrücke gleiche Schaltzustände der jeweiligen Schaltelemente aufweisen, eine solche Halbbrücke vollständig ausgeschaltet.

### Offenbarung der Erfindung

Im Rahmen der Erfindung wurde ein Verfahren zum Betreiben eines Inverters gemäß dem Anspruch 1 entwickelt, der drei Wechselstromphasen einer induktiven Last (z.B. einer Synchronmaschine) durch das Ansteuern von in drei Halbbrücken angeordneten Schaltelementen jeweils wahlweise mit dem Pluspol oder Minuspol einer am Eingang des Inverters vorgelegten Gleichspannung verbindet. Die Schaltelemente können insbesondere beispielsweise als Leistungshalbleiter ausgebildet sein. Dabei werden die Schaltzustände der Schaltelemente durch umlaufende Raumzeigermodulation verändert. In der Raumzeigerdarstellung wird die Stromverteilung über die drei Phasen durch den Betrag, Realteil oder Imaginärteil des Raumzeigers einerseits und den Winkel des Raumzeigers zu einer Koordinatenachse andererseits charakterisiert. In diesem Zusammenhang bedeutet "umlaufend" insbesondere, dass durch die Modulation immer wieder neue resultierende Raumzeiger erzeugt werden und sich deren Winkel fortwährend in einer konsistenten Drehrichtung ändern.

Da jede Halbbrücke die ihr zugeordnete Wechselstromphase nur entweder mit dem Pluspol oder mit dem Minuspol der Gleichspannung verbinden kann, können mit statischen Schaltzuständen der Schaltelemente nur maximal 2³=8 verschiedene Raumzeiger dargestellt werden. Diese Raumzeiger reichen alleine nicht aus, um beispielsweise einen Elektromotor zur Rotation anzutreiben. Hierfür sind noch eine Vielzahl weiterer Raumzeiger erforderlich, die zwischen den wenigen einstellbaren Raumzeigern liegen. Im Rahmen der Raumzeigermodulation werden durch abwechselndes Anlegen einstellbarer Raumzeiger, die in positiver oder negativer Richtung des Winkels oder im Null-Zustand benachbart sind, in Pulsweitenmodulation die jeweils zwischen diesen einstellbaren Raumzeigern liegenden weiteren Raumzeiger erzeugt.

Bei einer Modulation zwischen Raumzeigern, die bezüglich mindestens einer Halbbrücke gleiche Schaltzustände der jeweiligen Schaltelemente aufweisen, bleibt nun eine solche Halbbrücke vollständig ausgeschaltet.

Bei der herkömmlichen Raumzeigermodulation sind nur Schaltzustände zugelassen, in denen jede Halbbrücke die ihr zugeordnete Phase entweder mit dem Pluspol oder mit dem Minuspol der Gleichspannung verbindet. Es ist also in jeder Halbbrücke immer genau ein Schaltelement eingeschaltet und das andere ausgeschaltet. Schaltzustände, in denen beide Schaltelemente einer Halbbrücke ausgeschaltet sind, kommen nicht vor. Die Einführung genau solcher Schaltzustände verändert die jeweils zugehörigen Raumzeiger und führt daher dazu, dass die bei der Raumzeigermodulation letztendlich gebildeten Zeitverläufe der durch die Wechselstromphasen fließenden Ströme von der Sinusform abweichen. Im Gegenzug werden alle Schaltvorgänge auf der vollständig ausgeschalteten Halbbrücke eingespart. Es wurde erkannt, dass gerade beim Ansteuern induktiver Lasten die Abweichung von der Sinusform in vielen Fällen die von der Last jeweils ausgeübte Funktion nicht beeinträchtigt. Daher kann das Zeitprogramm der Schaltvorgänge in der beschriebenen Weise "verlustbehaftet komprimiert" werden. Die Situation ist in gewisser Weise vergleichbar mit der Kompression von Bildern, Audio- und Videodaten, wo der Übergang von verlustfreien zu verlustbehafteten Kompressionsverfahren die Effizienz der Komprimierung in neue Größenordnungen steigerte.

Erfindungsgemäß wird innerhalb eines zusammenhängenden Sektors im Raumzeigerdiagramm, in dem der Schaltzustand der mindestens einer Halbbrücke zugeordneten Schaltelemente gleich bleibt, eine solche Halbbrücke vollständig ausgeschaltet. "Zusammenhängend" ist hierbei in positiver oder negativer Richtung des Winkels des Raumzeigers zu verstehen.

Es wurde erkannt, dass es im Raumzeigerdiagramm in positiver oder negativer Richtung des Winkels Abfolgen eines ersten, zweiten und dritten Raumzeigers gibt dergestalt, dass durch eine Änderung des Schaltzustands einer ersten Halbbrücke vom ersten Raumzeiger zum zweiten Raumzeiger und durch eine anschließende Änderung des Schaltzustands einer zweiten Halbbrücke vom zweiten Raumzeiger zum dritten Raumzeiger gewechselt werden kann. In dem von dem ersten Raumzeiger und dem dritten Raumzeiger eingeschlossenen Sektor wird also der Fortschritt insgesamt nur durch Änderungen der Schaltzustände zweier Halbbrücken charakterisiert. Der Schaltzustand der dritten Halbbrücke fügt somit keine weitere Information hinzu, und es geht nichts Wesentliches verloren, wenn die dritte Halbbrücke komplett ausgeschaltet bleibt.

In einer vorteilhaften Ausgestaltung erfolgt die Raumzeigermodulation nur zwischen sogenannten aktiven Raumzeigern. Die aktiven Raumzeiger repräsentieren Zustände, in denen zwischen mindestens zwei der Wechselstromphasen eine von Null verschiedene Spannung anliegt. Daneben existieren noch sogenannte Nullspannungsraumzeiger, die Schaltzustände repräsentieren, in denen alle drei Wechselstromphasen gegeneinander kurzgeschlossen sind. Wenn durch Raumzeigermodulation ein sinusförmiges Drehfeld erzeugt werden soll, werden auch diese Nullspannungsraumzeiger benötigt. Da aber im Rahmen des Verfahrens durch das vollständige Ausschalten von Halbbrücken die Abkehr von der exakten Sinusform der erzeugten Wechselströme ohnehin schon "beschlossene Sache" ist, können die zum Anlegen der Nullspannungsraumzeiger nötigen Schaltvorgänge ebenfalls eingespart werden.

In einer besonders vorteilhaften Ausgestaltung wird die Raumzeigermodulation auf das Ziel gesteuert und/oder geregelt, dass durch die induktive Last ein dreiphasiger Wechselstrom mit einem vorgegebenen Effektivwert fließt, der im Sinne eines Drehfelds kommutiert. Gerade in solchen Anwendungen kommt es insbesondere auf den genauen Zeitverlauf der Ströme innerhalb einer Periode des Wechselstroms nicht an, solange der Effektivwert der Vorgabe entspricht.

Das "Verschönern" dieses Zeitverlaufs hin zu einer Sinusform ist also für die technische Funktion der induktiven Last nicht notwendig, sondern kostet nur Schaltvorgänge.

Die induktive Last kann insbesondere vorteilhaft ein Elektromotor sein. Um eine Drehung des Motors anzuregen und zu unterhalten, ist es lediglich notwendig, dass zu jedem Zeitpunkt resultierende magnetische Kräfte zwischen Stator und Rotor entstehen, die die Drehung weiter antreiben. Dies setzt nicht zwingend voraus, dass die Anregung der magnetischen Spulen des Motors zeitlich einen genau sinusförmigen Verlauf hat.

In einer weiteren besonders vorteilhaften Ausgestaltung wird der Motor in Sternschaltung betrieben. Das bedeutet, dass die drei Wicklungen des Motors, die von den drei Wechselstromphasen versorgt werden, einen gemeinsamen Sternpunkt haben. Dieser Sternpunkt ist nicht geerdet.

In dieser Konfiguration kann ein Strom, der beispielsweise ausgehend vom Pluspol der Gleichspannung aus einer Halbbrücke des Inverters durch eine Wicklung des Motors geflossen ist, nur durch die beiden anderen Wicklungen in die anderen Halbbrücken des Inverters und von dort letztendlich zurück zum Minuspol der Gleichspannung gelangen, um den Stromkreis zu schließen. Das vollständige Ausschalten einer Halbbrücke hat hier die Wirkung, dass für die Rückleitung zum Minuspol der Gleichspannung nur noch eine statt zwei Halbbrücken zur Verfügung stehen. Das aber bedeutet, dass der Strom auf dem Weg vom Sternpunkt zum Minuspol nicht mehr eine Parallelschaltung der beiden anderen Wicklungen überwinden muss, sondern eine konkrete der Wicklungen. Da jede Wicklung eine unvermeidliche Impedanz hat, muss der Strom also insgesamt eine höhere Impedanz überwinden.

Dies führt dazu, dass an jeder Wicklung weniger Spannung abfällt und somit insgesamt weniger elektrische Leistung im Motor umgesetzt wird. Zugleich fällt auch über den Schaltelementen des Inverters jeweils weniger Spannung ab. Sofern es sich bei diesen Schaltelementen um Leistungshalbleiter (wie etwa Transistoren) handelt, werden dann die Durchlassverluste dieser Halbleiter vermindert, die zu den Schaltverlusten noch hinzukommen. Die Durchlassverluste hängen sowohl vom Spannungsabfall über dem Schaltelement als auch von dem jeweils durchgelassenen elektrischen Strom ab.

Die verminderte Leistungsaufnahme bedeutet im Umkehrschluss, dass der Motor weniger mechanische Leistung abgeben kann. Im Volllastbetrieb würde somit die Funktion des Motors geschmälert. Das Verfahren ist jedoch speziell für den Teillastbetrieb und Leerlaufbetrieb von Motoren und anderen induktiven Lasten gedacht.

Es wurde erkannt, dass gerade im Teillast- oder gar Leerlaufbetrieb von Elektromotoren der Anteil der Schaltverluste an den Gesamtverlusten deutlich zunimmt: Wenn der angeforderte effektive Strom um den Faktor 20 reduziert wird, reduzieren sich die Schaltverluste nach dem bisherigen Stand der Technik lediglich um den Faktor 2. Im Leerlaufbetrieb kann dadurch der Wirkungsgrad des Inverters auf unter 25 % sinken. Hier wird nun eine deutliche Verbesserung bewirkt um den Preis, dass der zeitliche Verlauf des Stroms mehr oder weniger deutlich vom sinusförmigen dreiphasigen Wechselstrom abweicht. Allerdings wird das Stromripple des Stroms nicht beeinflusst, weil die PWM-Frequenz immer noch fest bleibt. Gerade im Teillast- und Leerlaufbetrieb fällt aber eine durch die Erhöhung des Widerstands, sowie möglicherweise zusätzlich auch durch die Abweichung von der Sinusform, bewirkte Verminderung der maximalen Leistungsabgabe des Elektromotors nicht ins Gewicht. Viel wichtiger ist die Verbesserung des Wirkungsgrades des Inverters.

Viele Antriebssysteme werden typischerweise nur für einen sehr geringen Anteil ihrer Betriebszeit mit Höchstgeschwindigkeit gefahren. Dementsprechend machen der Teillast- und der Leerlaufbetrieb zusammen den größten Anteil der Betriebszeit des elektrischen Antriebsstrangs aus. Mit dem vorgeschlagenen Verfahren wird die Effizienz des Systems im Teillastbetrieb deutlich verbessert.

Daher werden durch die Reduzierung der Schaltverluste durchaus nennenswerte Energiemengen eingespart, was besonders bei der Anwendung im Antriebsstrang eines Fahrzeugs vorteilhaft ist. Da Fahrzeuge in der Regel einen begrenzten Energievorrat mitführen, schlägt sich die eingesparte Energie auch in einer erhöhten Reichweite nieder.

Daher wird vorteilhaft eine Betriebsphase der induktiven Last gewählt, in der die induktive Last mit maximal 20 %, bevorzugt mit maximal 10 % und ganz besonders bevorzugt mit maximal 5 %, ihrer Nennleistung betrieben wird.

Das Verfahren kann insbesondere ganz oder teilweise computerimplementiert sein. Daher bezieht sich die Erfindung auch auf ein Computerprogramm mit maschinenlesbaren Anweisungen, die, wenn sie auf einem oder mehreren Computern ausgeführt werden, den oder die Computer dazu veranlassen, das Verfahren auszuführen. In diesem Sinne sind auch Steuergeräte für Fahrzeuge und Embedded-Systeme für technische Geräte, die ebenfalls in der Lage sind, maschinenlesbare Anweisungen auszuführen, als Computer anzusehen.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Weiterhin kann ein Computer mit dem Computerprogramm, mit dem maschinenlesbaren Datenträger bzw. mit dem Downloadprodukt ausgerüstet sein.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
- Figur 1: Ausführungsbeispiel des Verfahrens 100;
- Figur 2: Veranschaulichung der Raumzeigermodulation;

Figur 3 Beispielhafte Anwendung des Verfahrens 100 an einem Inverter 1 mit Elektromotor als induktiver Last 4.

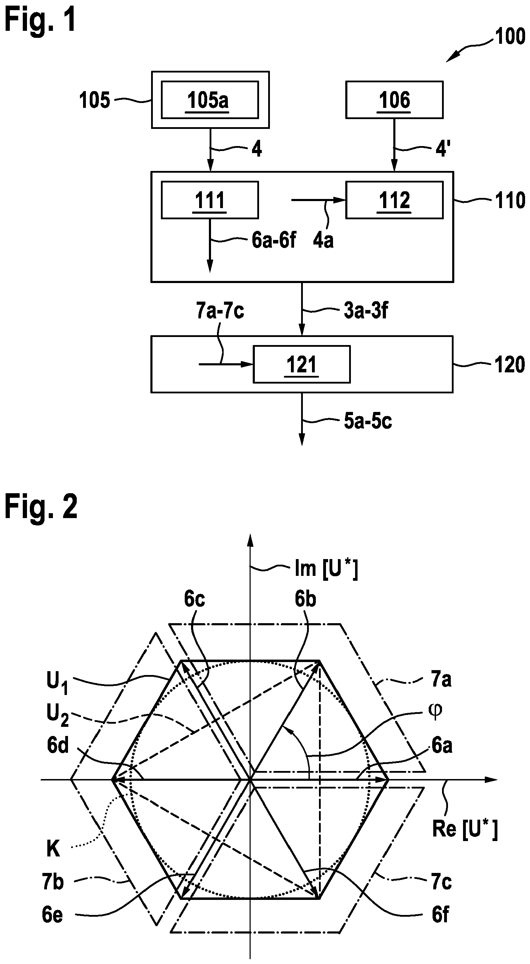

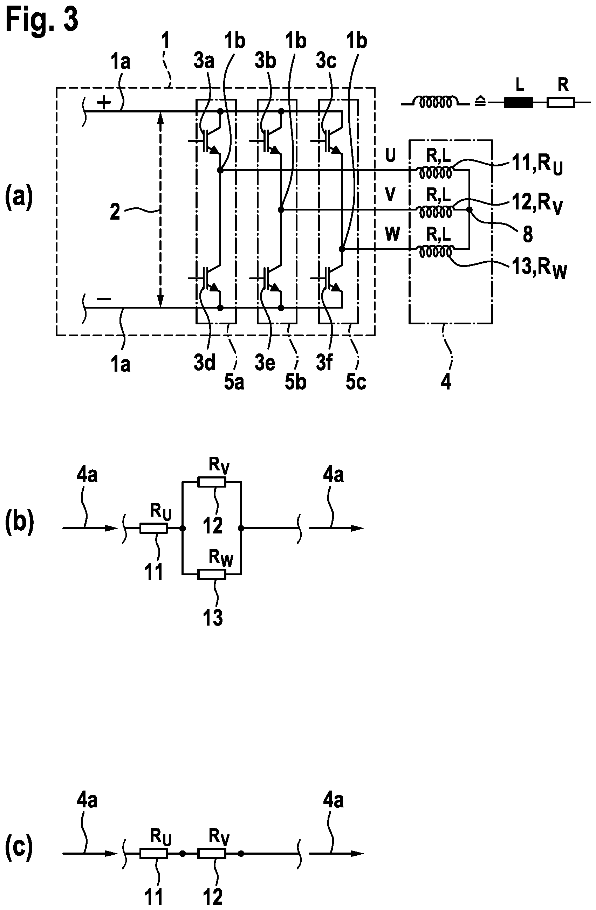

Figur 1 veranschaulicht ein Ausführungsbeispiel des Verfahrens 100 zum Betreiben eines Inverters 1. Der Inverter 1 selbst ist in Figur 3 näher dargestellt.

In Schritt 110 werden die Schaltzustände der Schaltelemente 3a-3f des Inverters 1 durch umlaufende Raumzeigermodulation verändert. Gemäß Schritt 120 bleibt jeweils eine Halbbrücke 5a-5c, für die die gerade bei der Modulation verwendeten Raumzeiger 6a-6f gleiche Schaltzustände vorgeben, komplett ausgeschaltet.

Dabei wird in diesem Ausführungsbeispiel in Schritt 105 ein Elektromotor als induktive Last 4 gewählt. Gemäß Block 105a wird dieser Elektromotor in Sternschaltung mit einem nicht geerdeten Sternpunkt 8 betrieben.

In Schritt 106 wird eine Teillast-Betriebsphase 4' der induktiven Last 4 als diejenige Betriebsphase gewählt, in der Halbbrücken 5a-5c komplett ausgeschaltet bleiben und die umlaufende Raumzeigermodulation insoweit modifiziert wird.

Innerhalb des Kastens 110 ist beispielhaft dargestellt, wie die umlaufende Raumzeigermodulation näher ausgestaltet werden kann.

Gemäß Block 111 kann die Raumzeigermodulation insbesondere nur zwischen aktiven Raumzeigern 6a-6f erfolgen. Im Gegensatz zu sogenannten Nullspannungsraumzeigern repräsentieren aktive Raumzeiger Zustände, in denen zwischen mindestens zwei der Wechselstromphasen U, V, W eine von Null verschiedene Spannung anliegt. Wenn keine Nullspannungsraumzeiger verwendet werden, wird vorteilhaft der Gleichtaktstrom reduziert.

Gemäß Block 112 kann die Raumzeigermodulation insbesondere durch entsprechende Steuerung und/oder Regelung auf das Ziel gerichtet sein, dass durch die induktive Last 4 ein dreiphasiger Wechselstrom 4a mit einem vorgegebenen Effektivwert fließt, der im Sinne eines Drehfelds kommutiert.

Gemäß Block 121 kann innerhalb eines zusammenhängenden Sektors 7 im Raumzeigerdiagramm, in dem der Schaltzustand der mindestens einer Halbbrücke 5a-5c zugeordneten Schaltelemente 3a, 3d; 3b, 3e; 3c, 3f gleich bleibt, eine solche Halbbrücke 5a-5c vollständig ausgeschaltet bleiben.

Figur 2 veranschaulicht die Raumzeigermodulation an einem Raumzeigerdiagramm. Eingezeichnet sind die sechs aktiven Raumzeiger 6a-6f. Die Koordinatenachsen repräsentieren den Realteil und Imaginärteil der komplexen Wechselspannung U*. In Tabelle 1 sind die zugehörigen Schaltzustände der Halbbrücken 5a-5c und ihrer Schaltelemente 3a-3f angegeben.

**Tabelle 1: Raumzeigermodulation (ohne Deaktivieren von Halbbrücken 5a-5c)**

| Halbbrücke | 5a | | 5b | | 5c | |
|---|---|---|---|---|---|---|
| Schaltelement | 3a | 3d | 3b | 3e | 3c | 3f |
| Raumzeiger | | | | | | |
| 6a | ein | aus | aus | ein | aus | ein |
| 6b | ein | aus | - - ein | aus | aus | ein |
| 6c | aus | ein | ein | aus | aus | ein |
| 6d | aus | ein | ein | aus | ein | aus |
| 6e | aus | ein | - - aus | ein | ein | aus |
| 6f | ein | aus | aus | ein | ein | aus |

Die Raumzeiger 6a, 6b und 6c, die in positiver Drehrichtung des Winkels ϕ aufeinander folgen, haben gemeinsam, dass die beiden Schaltelemente 3c und 3f der Halbbrücke 5c jeweils in den gleichen Schaltzuständen bleiben. Daher schließen die Raumzeiger 6a und 6c einen Sektor 7a ein, in dem der Schaltzustand der Halbbrücke 5c konstant ist. Wenn nun innerhalb dieses Sektors 7, der in Tabelle 1 durch eine dicke Umrahmung gekennzeichnet ist, die Halbbrücke 5c komplett ausgeschaltet bleibt (also beide Schaltelemente 3c und 3f ständig "aus"), werden zwei Schaltvorgänge eingespart: Beim Übergang vom Raumzeiger 6c zum Raumzeiger 6d muss das Schaltelement 3f nicht ausgeschaltet werden, denn es ist bereits aus. Ebenso muss beim Übergang vom Raumzeiger 6f zum Raumzeiger 6a das Schaltelement 3f nicht eingeschaltet werden, denn es soll ausgeschaltet bleiben.

Analog schließen die Raumzeiger 6c und 6e einen zweiten Sektor 7b ein, in dem der Schaltzustand der ersten Halbbrücke 5a konstant ist. Innerhalb dieses Sektors 7b, der in Tabelle 1 durch eine gepunktete Umrandung gekennzeichnet ist, kann die erste Halbbrücke 5a komplett ausgeschaltet bleiben.

Die Raumzeiger 6e und 6a schließen einen dritten Sektor 7c ein, in dem der Schaltzustand der zweiten Halbbrücke 5b konstant ist. Innerhalb dieses Sektors 7c, der in Tabelle 1 durch eine gestrichelte Umrandung gekennzeichnet ist, kann die zweite Halbbrücke 5b komplett ausgeschaltet bleiben.

Diese Veränderungen bedingen, dass der letztendliche Zeitverlauf des durch die induktive Last 4 getriebenen Wechselstroms 4a mehr oder weniger deutlich von der Sinusform abweicht. Für einen sinusförmigen Ausgangsstrom könnten nur Raumzeiger verwendet werden, die im Raumzeigerdiagramm auf dem Kreis K liegen. Dies würde nicht nur das aktive Schalten aller drei Halbbrücken 5a-5c erforderlich machen, sondern auch das Hinzunehmen von Nullspannungsraumzeigern. Dadurch wären insgesamt viel mehr Schaltvorgänge der Schaltelemente 3a-3f erforderlich.

Das komplette Ausschalten von Halbbrücken 5a-5c bewirkt, dass nur die Raumzeiger 6b, 6d und 6f mit der vollen Nennspannung U₁ geschaltet werden können. Daher kann die Pulsweitenmodulation nur zwischen den drei Raumzeigern 6b, 6d und 6f modulieren. Es sind daher mit der Pulsweitenmodulation nur solche resultierende Raumzeiger erzeugbar, die auf den gestrichelten Verbindungsstrecken zwischen den Endpunkten der Raumzeiger 6b, 6d und 6f enden. Dies entspricht einer verminderten Spannung U₂. Hierin spiegelt sich wider, dass, wie zuvor erläutert, der elektrische Widerstand eines in Sternschaltung betriebenen Elektromotors größer wird.

Figur 3a zeigt den vollständigen Aufbau aus einem Inverter 1 und einem Elektromotor als induktiver Last 4. Der Inverter 1 nimmt an seinem Eingang 1a eine Gleichspannung 2 entgegen und gibt an seinem Ausgang 1b einen Wechselstrom 4a mit Phasen U, V und W aus. Die Phase U wird über die erste Halbbrücke 5a angesteuert und dort wahlweise über das Schaltelement 3a mit dem Pluspol oder über das Schaltelement 3d mit dem Minuspol der Gleichspannung 2 verbunden. Die Phase V wird über die zweite Halbbrücke 5b angesteuert und dort wahlweise über das Schaltelement 3b mit dem Pluspol oder über das Schaltelement 3e mit dem Minuspol der Gleichspannung 2 verbunden. Die Phase W wird über die dritte Halbbrücke 5c angesteuert und dort wahlweise über das Schaltelement 3c mit dem Pluspol oder über das Schaltelement 3f mit dem Minuspol der Gleichspannung 2 verbunden.

Jede der Phasen U, V, W speist eine der Wicklungen 11, 12, 13 des Elektromotors 4, wobei diese drei Wicklungen 11, 12, 13 einen gemeinsamen nicht geerdeten Sternpunkt 8 haben. Die Wicklungen 11, 12, 13 haben nicht nur Induktivitäten L, sondern auch in Reihe hierzu geschaltete ohmsche Widerstände R_{U}, R_{V} bzw. R_{W}.

Figur 3b zeigt die Wirkung dieser ohmschen Widerstände ohne das gemäß dem Verfahren vorgesehene Abschalten ganzer Halbbrücken 5a-5c. Wenn der Wechselstrom 4a beispielsweise ausgehend vom Pluspol der Gleichspannung 2 über die erste Halbbrücke 5a durch die erste Wicklung 11 mit Widerstand Ru geleitet wird, kann die Rückleitung zum Minuspol nur über die Parallelschaltung aus der Wicklung 12 mit Widerstand Rv und der Wicklung 13 mit Widerstand Rw erfolgen.

Figur 3c zeigt, wie sich das komplette Abschalten der dritten Halbbrücke 5c auf den Gesamtwiderstand auswirkt. Für die Rückleitung steht nun nur noch die zweite Wicklung 12 mit Widerstand R_{V} zur Verfügung. Der Gesamtwiderstand wird also größer.

## Patentansprüche

1. Verfahren (100) zum Betreiben eines Inverters (1), der drei Wechselstromphasen (U, V, W) einer induktiven Last (4) durch das Ansteuern von in drei Halbbrücken (5a-5c) angeordneten Schaltelementen (3a-3f) jeweils wahlweise mit dem Pluspol oder Minuspol einer am Eingang (1a) des Inverters (1) vorgelegten Gleichspannung (2) verbindet, wobei die Schaltzustände der Schaltelemente (3a-3f) durch umlaufende Raumzeigermodulation verändert werden (110), wobei zusätzlich bei einer Modulation zwischen Raumzeigern (6a-6f), die bezüglich mindestens einer Halbbrücke (5a-5c) gleiche Schaltzustände der jeweiligen Schaltelemente (3a, 3d; 3b, 3e; 3c, 3f) aufweisen, eine solche Halbbrücke (5a-5c) vollständig ausgeschaltet bleibt (120), **dadurch gekennzeichnet, dass** innerhalb eines zusammenhängenden Sektors (7a-7c) im Raumzeigerdiagramm, in dem der Schaltzustand der mindestens einer Halbbrücke (5a-5c) zugeordneten Schaltelemente (3a, 3d; 3b, 3e; 3c, 3f) gleich bleibt, eine solche Halbbrücke (5a-5c) vollständig ausgeschaltet bleibt (121).

2. Verfahren (100) nach Anspruch 1, **dadurch gekennzeichnet, dass** die Raumzeigermodulation (110) nur zwischen aktiven Raumzeigern (6a-6f) erfolgt (111), die Zustände repräsentieren, in denen zwischen mindestens zwei der Wechselstromphasen (U, V, W) eine von Null verschiedene Spannung anliegt.

3. Verfahren (100) nach einem der Ansprüche 1 oder 2, **dadurch gekennzeichnet, dass** die Raumzeigermodulation (110) auf das Ziel gesteuert und/oder geregelt wird (112), dass durch die induktive Last (4) ein dreiphasiger Wechselstrom (4a) mit einem vorgegebenen Effektivwert fließt, der im Sinne eines Drehfelds kommutiert.

4. Verfahren (100) nach einem der Ansprüche 1 bis 3, **dadurch gekennzeichnet, dass** ein Elektromotor als induktive Last (4) gewählt wird (105).

5. Verfahren nach Anspruch 4, **dadurch gekennzeichnet, dass** der Elektromotor in Sternschaltung betrieben wird (105a) mit einem nicht geerdeten Sternpunkt (8).

6. Verfahren (100) nach einem der Ansprüche 1 bis 5, **dadurch gekennzeichnet, dass** eine Betriebsphase (4') der induktiven Last (4) gewählt wird (106), in der die induktive Last (4) mit maximal 20 %, bevorzugt mit maximal 10 % und ganz besonders bevorzugt mit maximal 5 %, ihrer Nennleistung betrieben wird.

7. Computerprogramm, enthaltend maschinenlesbare Anweisungen, die, wenn sie auf einem oder mehreren Computern ausgeführt werden, den oder die Computer dazu veranlassen, das Verfahren (100) nach einem der Ansprüche 1 bis 6 auszuführen.

8. Maschinenlesbarer Datenträger und/oder Downloadprodukt mit dem Computerprogramm nach Anspruch 7.

9. Computer, ausgerüstet mit dem Computerprogramm nach Anspruch 7, und/oder mit dem maschinenlesbaren Datenträger und/oder Downloadprodukt nach Anspruch 8.

## Claims

1. Method (100) for operating an inverter (1), which connects three AC phases (U, V, W) of an inductive load (4) in each case optionally to the positive terminal or negative terminal of a DC voltage (2) provided at the input (1a) of the inverter (1) by means of driving of switching elements (3a-3f) arranged in three half-bridges (5a-5c), wherein the switching states of the switching elements (3a-3f) are changed by means of revolving space vector modulation (110), wherein, in addition, in the case of modulation between space vectors (6a-6f) which have identical switching states of the respective switching elements (3a, 3d; 3b, 3e; 3c, 3f) with respect to at least one half-bridge (5a-5c), such a half-bridge (5a-5c) remains completely switched off (120), **characterized in that**, within a coherent sector (7a-7c) in the space vector diagram in which the switching state of the switching elements (3a, 3d; 3b, 3e; 3c, 3f) associated with at least one half-bridge (5a-5c) remains the same, such a half-bridge (5a-5c) remains completely switched off (121).

2. Method (100) according to Claim 1, **characterized in that** the space vector modulation (110) only takes place between active space vectors (6a-6f) (111) which represent states in which a voltage which is different than zero is present between at least two of the AC phases (U, V, W).

3. Method (100) according to one of Claims 1 or 2, **characterized in that** the space vector modulation (110) is subjected to open-loop and/or closed-loop control (112) with the aim that a three-phase alternating current (4a) with a preset rms value which commutates in the sense of a rotating field flows through the inductive load (4).

4. Method (100) according to one of Claims 1 to 3, **characterized in that** an electric motor is selected as inductive load (4) (105).

5. Method according to Claim 4, **characterized in that** the the electric motor is operated in star-connected fashion (105a) with an unearthed neutral point (8).

6. Method (100) according to one of Claims 1 to 5, **characterized in that** an operating phase (4') of the inductive load (4) is selected (106) in which the inductive load (4) is operated at a maximum of 20%, preferably at a maximum of 10%, and very particularly preferably at a maximum of 5%, of its rated power.

7. Computer program, containing machine-readable instructions which, when implemented on one or more computers, instruct the computer(s) to implement the method (100) according to one of Claims 1 to 6.

8. Machine-readable data carrier and/or download product having the computer program according to Claim 7.

9. Computer, equipped with the computer program according to Claim 7 and/or with the machine-readable data carrier and/or download product according to Claim 8.

## Revendications

1. Procédé (100) permettant de faire fonctionner un onduleur (1) qui relie trois phases de courant alternatif (U, V, W) d'une charge inductive (4) par le pilotage d'éléments de commutation (3a à 3f) disposés en trois demi-ponts (5a à 5c) respectivement au choix au pôle positif ou au pôle négatif d'une tension continue (2) appliquée à l'entrée (1a) de l'onduleur (1), dans lequel les états de commutation des éléments de commutation (3a à 3f) sont modifiés (110) par une modulation de vecteurs d'espace tournante, dans lequel de plus, lors d'une modulation entre les vecteurs d'espace (6a à 6f) qui présentent par rapport à au moins un demi-pont (5a à 5c) des états de commutation identiques des éléments de commutation (3a, 3d ; 3b, 3e ; 3c, 3f) respectifs, un tel demi-pont (5a à 5c) reste entièrement déconnecté (120), **caractérisé en ce qu'**à l'intérieur d'un secteur cohérent (7a à 7c) sur le diagramme de vecteurs d'espace dans lequel l'état de commutation des éléments de commutation (3a, 3d ; 3b, 3e ; 3c, 3f) associés à au moins un demi-pont (5a, 5c) reste identique, un tel demi-pont (5a à 5c) reste entièrement déconnecté (121).

2. Procédé (100) selon la revendication 1, **caractérisé en ce que** la modulation de vecteurs d'espace (110) n'a lieu (111) qu'entre des vecteurs d'espace (6a à 6f) actifs qui représentent des états dans lesquels une tension différente de zéro est appliquée entre au moins deux des phases de courant alternatif (U, V, W).

3. Procédé (100) selon l'une quelconque des revendications 1 ou 2, **caractérisé en ce que** la modulation de vecteurs d'espace (110) est commandée et/ou régulée (112) dans le but qu'un courant alternatif triphasé (4a) avec une valeur effective prédéfinie passe par la charge inductive (4) qui commute sous forme de champ tournant.

4. Procédé (100) selon l'une quelconque des revendications 1 à 3, **caractérisé en ce qu'**un moteur électrique est choisi (105) comme charge inductive (4).

5. Procédé selon la revendication 4, **caractérisé en ce que** le moteur électrique fonctionne (105a) dans un couplage en étoile avec un point neutre (8) non relié à la terre.

6. Procédé (100) selon l'une quelconque des revendications 1 à 5, **caractérisé en ce qu'**une phase de fonctionnement (4') de la charge inductive (4) est choisie (106) dans laquelle la charge inductive (4) fonctionne avec un maximum de 20 %, de préférence un maximum de 10 %, et de manière tout particulièrement préférée avec un maximum de 5 % de sa puissance nominale.

7. Programme informatique comprenant des instructions lisibles par machine qui, lorsqu'elles sont exécutées sur un ou plusieurs ordinateurs, font que le(s) ordinateur(s) exécute(nt) un procédé (100) selon l'une quelconque des revendications 1 à 6.

8. Support de données lisible par machine et/ou produit à télécharger comprenant le programme informatique selon la revendication 7.

9. Ordinateur, équipé du programme informatique selon la revendication 7 et/ou du support de données lisible par machine et/ou du produit à télécharger selon la revendication 8.
